**Europäisches Patentamt**

**European Patent Office**

**Office européen des brevets**

(19)

(11) Veröffentlichungsnummer: **0 335 082 A2**

## (12) EUROPÄISCHE PATENTANMELDUNG

(21) Anmeldenummer: 89101965.5

(22) Anmeldetag: 04.02.89

(51) Int. Cl.⁴: **B60C 23/04**

(30) Priorität: 30.03.88 DE 3810763

(43) Veröffentlichungstag der Anmeldung:
04.10.89 Patentblatt 89/40

(84) Benannte Vertragsstaaten:
**DE ES FR GB IT NL SE**

(71) Anmelder: **Dr.Ing.h.c. F. Porsche Aktiengesellschaft**
**Porschestrasse 42**
**D-7000 Stuttgart 40(DE)**

(72) Erfinder: **Schmierer, Wolfgang, Dipl.-Ing.**
**Humboldtstrasse 21**
**D-7530 Pforzheim(DE)**

(54) **Druckschalter zur Überwachung eines Reifenluftdrucks, insbesondere von Kraftfahrzeug-Reifen.**

(57) Ein Druckschalter zur Überwachung eines Reifenluftdrucks, insbesondere für Kraftfahrzeugreifen ist an einer Radfelge befestigt und wird vom Luftdruck im Reifen betätigt. Er umfaßt eine Referenzdruckkammer, die zum Reifen hin durch eine elektrisch leitende Schaltmembran abgeschlossen ist und einen mit dieser Membran zusammenwirkenden Kontaktstift trägt. Die Schaltmembran weist eine derart fliehkraftabhängig gesteuerte Masse auf, daß der Schaltpunkt des Druckschalters selbsttätig veränderbar ist.

FIG.1

EP 0 335 082 A2

## Druckschalter zur Überwachung eines Reifenluftdrucks, insbesondere von Kraftfahrzeug-Reifen

Die Erfindung bezieht sich auf einen Druckschalter nach dem Oberbegriff des Anspruchs 1.

Es ist aus der DE-OS 35 43 864 ein Reifendrucksensor zur Überwachung eines Reifenluftdrucks bekannt, der einen Druckschalter mit einer Referenzdruckkammer umfaßt, die zum Reifeninnenraum hin durch eine elektrisch leitende Schaltmembran abgeschlossen ist und einen mit dieser Membran zusammenwirkenden Kontaktstift trägt. Bei Kontakt des Stiftes mit der Schaltmembran herrscht im Fahrzeugreifen ein vorgeschriebener Betriebsdruck. Ein derartiger Druckschalter ist über einen Geschwindigkeitsbereich von z.B. 0 - 280 km/h nur für einen Schaltpunkt auslegbar, das heißt, daß über einen einzigen Druckschalter nur ein Luftdruck entweder bei hohen oder bei niederen Geschwindigkeiten genau zu überwachen ist.

Aufgabe der Erfindung ist es, einen Druckschalter nach der im Oberbegriff des Anspruchs 1 genannten Gattung zu schaffen, mit dem Mindestluftdrücke eines Fahrzeugrades in Abhängigkeit von der Fahrzeuggeschwindigkeit zu überwachen sind.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß durch die besondere Ausbildung der Schaltmembran der Schaltpunkt des Druckschalters dem zur jeweiligen Geschwindigkeit notwendigen Mindestluftdruck anpaßbar ist. Dies wird durch eine definierte Wanddicke bzw. durch eine Massenanhäufung an der Schaltmembran erzielt, wodurch sich eine vergrößerte Flächenmasse und eine sich hieraus über die Fahrzeuggeschwindigkeit erhöhende Fliehkraft ergibt, die eine entsprechende Auslenkbewegung der Schaltmembrane bewirkt, wodurch sich ein selbsttätig veränderbarer Schaltpunkt in Abhängigkeit von der Geschwindigkeit einstellt.

Ausführungsbeispiele der Erfindung sind in der Zeichnung dargestellt und werden im folgenden näher beschrieben.

Es zeigen:

Fig. 1 einen Druckschalter teilweise im Schnitt,

Fig. 2 ein beispielweises Diagramm über den Fliehkrafteinfluß auf die Schaltmembrane und den Druckschalter,

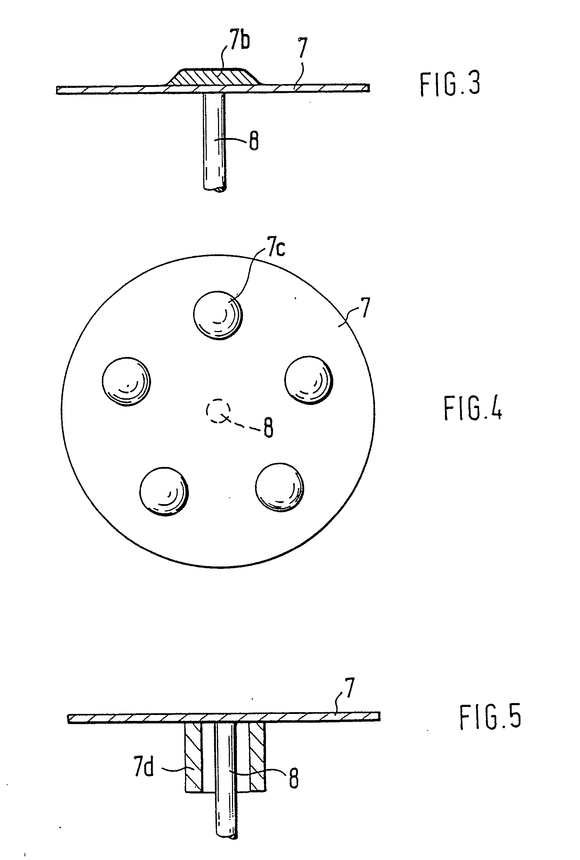

Fig. 3 eine Darstellung der Schaltmembran mit einer punktförmigen Massenanhäufung,

Fig. 4 eine Draufsicht auf eine Schaltmembran mit am Umfang verteilt angeordneten Massenanhäufungen und

Fig. 5 eine Schaltmembran im Schnitt mit einer innen angeordneten Hülse als Masse.

Ein Druckschalter 1 ist in einer Radfelge 2 angeordnet und umfaßt in einem Sensorgehäuse 5 eine Druckkammer 6 mit einem Referenzdruck $P_i$, die zum Luftdruck $P_R$ im Reifen durch eine Schaltmembran 7 abgeschlossen ist. In der Mitte der Druckkammer 6 ist ein Kontaktstift 8 druckdicht und elektrisch isoliert in der Referenzdruckkammer 6 befestigt. Die Schaltmembran 7 und der Kontaktstift 8 sind so zueinander angeordnet, daß bei einem ausreichenden Luftdruck PR im Fahrzeugreifen zwischen ihnen eine elektrische Verbindung besteht. Fällt dagegen der Luftdruck $P_R$ im Reifen unter den Referenzdruck $P_i$ in der Druckkammer 6 ab, so hebt die Schaltmembran 7 vom Kontaktstift 8 ab und es wird eine Warnanzeige durch eine nicht näher dargestellte elektrische Schaltung oder dergleichen ausgelöst.

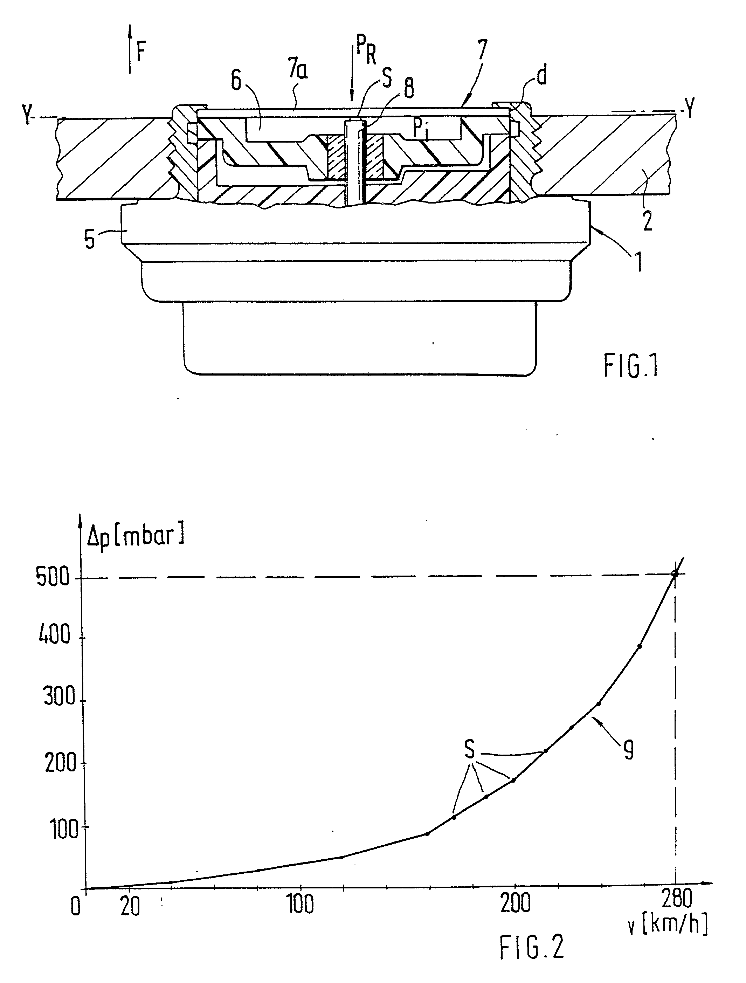

Die Membran 7 bildet ein Element, das den Schaltpunkt S des Druckschalters 1 entsprechend der Geschwindigkeit selbsttätig nachbildet. Hierzu ist die Membran 7 mit einer zusätzlichen Masse behaftet oder mit einer gegenüber der bekannten Schaltmembrane (DE-OS 35 43 864) z.B. stärkeren Wanddicke d versehen, wie Fig. 1 näher zeigt. Hierdurch wird ein Fliehkrafteinfluß auf die Membran 7 verstärkt. Insbesondere weist die Schaltmembran 7 eine durchgehend gleiche Wanddicke d (Position 7a) auf. Denkbar wäre aber auch eine ungleichmäßige Wanddicke bzw. eine Massenanhäufung 7b im zentrischen Bereich der Membrane 7. Diese Massenanhäufung 7b kann aus einer punktförmigen Masse oder aus einer Hülse 7d bestehen, die innenseitig der Membrane 7 angeordnet ist und den Schaltstift 8 mit Freiraum umgibt. Desgleichen kann eine Massenanhäufung 7c gleichmäßig über den Umfang der Membran 7 verteilt angeordnet sein. Insbesondere ist die Membran 7 in einer annähernd rechtwinklig zur Kraftrichtung F der Fliehkraft verlaufenden senkrechten Querebene Y-Y angeordnet.

Wie aus dem Diagramm gemäß Fig. 2, welches die Nachführung des Schaltpunktes in Abhängigkeit von der Fahrgeschwindigkeit zeigt, zu erkennen ist, kann der Schaltpunkt S des Druckschalters 1 entsprechend dem für den Reifen bei der jeweiligen Geschwindigkeit notwendigen Luftdruck angepaßt werden. Das heißt, der notwendige Luftdruck des Reifens für die jeweilige Geschwindigkeit des Reifens kann überwacht werden, so daß im unteren Geschwindigkeitsbereich Z.B. bis 160 km/h ein um ca. 0,5 bar niederer Luftdruck gefahren werden kann als bei $V_{max}$ = 280 km/h. Die Schaltkennlinie 9, wie beispielsweise im Diagramm in Fig. 2 dargestellt, wird dem zur jeweiligen Geschwindigkeit passenden Mindestlustdruck angepaßt. Falls der Druck im Reifen zu nieder für die gefahrene Geschwindigkeit ist, wird über den Druckschalter 1 eine Warnung ausgelöst.

Der Schaltpunkt des Drucksensors ist somit entsprechend der gefahrenen Geschwindigkeit des Kraftfahrzeugs entlang der Kennlinie 9 veränderbar, so daß nur ein einziger Druckschalter 1 für verschiedene Reifenluftdrücke erforderlich ist, die über die fliehkraftabhängig gesteuerte zusätzliche Masse 7a; 7b; 7c; 7d der Schaltmembran 7 nachbildbar sind.

Für andere Anwendungsfälle bzw. Fahrzeuge sind in Abhängigkeit von Reifenbauart, Reifendimension, Radlast, Felgendimension, Schaltereinbaulage (Radios und und Winkellage), Membrandurchmesser, Membransteifigkeit usw. durch eine entsprechende Massenerhöhung an der Schaltmembran die gewünschten Schaltkennlinien ($P_{schalt}$ = f(V)) mit entsprechenden Druckunterschieden zwischen dem Druck bei niederen und hohen Geschwindigkeiten zu erreichen.

## Ansprüche

1. Druckschalter zur Überwachung eines Reifenluftdrucks, insbesondere von Kraftfahrzeugreifen, der an einer Radfelge befestigt ist, vom Luftdruck im Reifen betätigt wird und eine Referenzdruckkammer umfaßt, die zum Reifen hin durch eine elektrisch leitende Schaltmembran abgeschlossen ist und einen mit dieser Membran zusammenwirkenden Kontaktstift trägt, dadurch gekennzeichnet, daß die Schaltmembran (7) eine derart fliehkraftabhängig gesteuerte Masse (7a) aufweist, daß der Schaltpunkt (S) des Druckschalter (1) selbsttätig veränderbar ist.

2. Druckschalter nach Anspruch 1, dadurch gekennzeichnet, daß die Schaltpunkte (S) des Druckschalters (1) über die Geschwindigkeit des Fahrzeugs eine Kennlinie (9) bilden, die als Warnschwelle für einen zu niedrigen Reifenluftdruck nachgebildet ist.

3. Druckschalter nach den Ansprüchen 1 oder 2, dadurch gekennzeichnet, daß die Schaltmembran (7) des Druckschalters (1) in einer annähernd rechtwinklig zur Kraftrichtung (F) der Fliehkraft verlaufenden senkrechten Querebene (Y-Y) angeordnet ist.

4. Druckschalter nach den Ansprüchen 1, 2 oder 3, dadurch gekennzeichnet, daß die Schaltmembran (7) eine zentrische Massenanhäufung (7a) gegenüberliegend dem Schaltstift (8) aufweist.

5. Druckschalter nach einem oder mehreren der vorhergehenden Ansprüche, dadurch gekennzeichnet, daß eine zusätzliche Masse mit der Schaltmembran verbunden ist, die aus einer gleichmäßig über den Umfang verteilten Massenanhäufung besteht.

6. Druckschalter nach einem oder mehreren der vorhergehenden Ansprüche, dadurch gekennzeichnet, daß die Massenanhäufung aus einer definiert verdickten Wandung der Schaltmembran (7) besteht.

7. Druckschalter nach einem oder mehreren der vorhergehenden Ansprüche, dadurch gekennzeichnet, daß die Massenanhäufung aus einer mit der Schaltmembran (7) verbundenen zentrisch angeordneten Hülse besteht, die das freie Ende des Schaltstiftes umgibt.

FIG.1

FIG.2

EP 0 335 082 A2

FIG.3

FIG.4

FIG.5